# EUROPÄISCHE PATENTANMELDUNG

(11) **EP 4 844 125 A2**
(43) Veröffentlichungstag der Anmeldung: **25.11.2026**
(21) Anmeldenummer: 26196891.1
(22) Anmeldetag: 19.08.2024
(51) Int. Cl.: D21G 1/02

(54) **HEIZVORRICHTUNG ZUM BEHEIZEN EINER WALZE, WALZE, UND KALANDER ODER PRÄGEKASSETTE**

(30) Priorität: 21.08.2023 WO PCT/EP2023/072912
(62) Dokumentnummer(n) der früheren Anmeldung(en) nach Art. 76 EPÜ: 24195100.3 / 4 513 581
(71) Anmelder: Matthews International Corporation, Pittsburgh, Pennsylvania 15212 (US); Matthews International GmbH, 48691 Vreden (DE)
(72) Erfinder: WOLTERS, René, 48703 Stadtlohn (DE)
(74) Vertreter: Holzwarth-Rochford, Andreas

(57) **Zusammenfassung**

Die Erfindung betrifft eine Heizvorrichtung (1) zum Beheizen einer Walze (100), wobei die Heizvorrichtung (1) ein Heizelement (2) aufweist, das dazu eingerichtet ist, in eine Bohrung(4) der Walze (100) eingesetzt zu sein und eine Heizleistung und/oder Wärme zum Beheizen der Walze (100) und/oder eines Walzenkörpers (3) der Walze (100) bereitzustellen, bevorzugt elektrisch bereitzustellen, und wobei die Heizvorrichtung (1) einen Spannsatz (7) aufweist, der an einer Oberfläche (12) des Heizelements (2) angeordnet ist und der dazu eingerichtet ist, dass wenn die Heizvorrichtung (1) in die Bohrung (4) der Walze (100) eingesetzt ist, eine Innenfläche der Bohrung (4) zu kontaktieren und Wärme von dem Heizelement (2) leitend an die Walze (100) und/oder den Walzenkörper (3) zu übertragen. Die Erfindung betrifft weiterhin eine Walze (100). Die Erfindung betrifft zudem einen Kalander oder eine Prägekassette.

## Beschreibung

Die Erfindung betrifft eine Heizvorrichtung zum Beheizen einer Walze, eine Walze. Die Erfindung betrifft weiterhin einen Kalander oder eine Prägekassette.

Kalander und/oder Walzen werden häufig zum Herstellen und/oder Beschichten von bahnförmigen Trägern verwendet, beispielsweise Folien oder dergleichen. Ebenso werden Kalander und/oder Walzen bei der Herstellung von Elektroden, beispielsweise für Batterien oder Batteriezellen, z.B. Lithium-Ionen-Batterien oder Lithium-Ionen Akkumulatoren oder dergleichen, eingesetzt.

So können Kathode und/oder Anode einer Batteriezelle mittels verschiedener Aktivmaterialbeschichtungen auf Metallfolien, z.B. aus Kupfer für Anoden oder aus Aluminium bei Kathoden, hergestellt werden. Mithilfe eines Kalanders, auch Walzwerk genannt, können geeignete Beschichtungen, z.B. ein geeignetes Elektrodenmaterial oder Aktivmaterial, auf die Metallfolie aufgebracht werden. Die Einstellung der richtigen Temperatur der Walzen ist dabei essentiell, weil dabei verwendeter chemische Binder oder Primer als Haftungsvermittler zwischen der Metallfolie und dem Beschichtungsmaterial, z.B. dem Elektrodenmaterial oder Aktivmaterial, durch thermische Energie aktiviert wird.

Prägekassetten können zum Prägen und/oder Perforieren von bahnförmigem Material eingerichtet sein und/oder verwendet sein oder werden. Eine Prägekassette kann auch als Prägekalander bezeichnet sein. Die Prägekassette kann eine Walze zum Prägen und/oder Perforieren aufweisen. Die Prägekassette kann eine zweite Walze, z.B. eine Gegenwalze und/oder zweite Prägewalze, aufweisen. Das bahnförmige Material kann zwischen Walzen der Prägekassette geführt sein oder werden. Das bahnförmige Material kann beim Hindurchführen durch die Prägekassette geprägt und/oder perforiert sein oder werden. Das bahnförmige Material kann beispielsweise eine Folie sein oder aufweisen. Beispielsweise kann das bahnförmige Material Kunststoff und/oder Metall aufweisen, und/oder aus diesen bestehen.

Über eine Beheizung der Walze lassen sich wichtige Prozess- und Produktparameter empfindlich steuern. Beispielsweise kann ein Aktivieren des Primers zur Haftbarmachung der Aktivmaterialen untereinander und/oder auf der Metallfolie eingestellt sein oder werden. Durch die Wahl der Walzentemperatur kann eine genau Einstellung der Gesamtdicke der Elektrode erzielt werden, und/oder z.B. die Duktilität des Materials eingestellt sein oder werden. Es können zudem durch einen Temperaturgradient aufgrund reibungserwärmter Lagerung in der Walze induzierte Spannungen abgebaut oder reduziert sein oder werden.

Es ist bekannt, Walzen über eine Ölheizung zu beheizen. Dabei wird heißes Öl durch Kanäle der Walze geführt, um die Walze zu beheizen. Derartige Ölheizungen sind insofern nachteilig, da zum einen Öl als Arbeitsmedium verwendet wird und eine externe Heizung zum Erwärmen des Öls auch Zuleitungen und Ableitungen verwendet werden müssen, sich zum anderen eine vergleichsweise lange Vorlaufzeit ergibt. Ölheizungen benötigen damit eine relativ lange Zeit, bis die Walze auf eine vorgegebene Temperatur erwärmt ist. Zudem sind entsprechende Ölheizungen vergleichsweise teuer. Weiterhin ist das für Ölheizungen verwendete Öl, bzw. Thermalöl, üblicherweise nur bis ca. 250 °C stabil, so dass der Einsatz von Ölheizungen bei Temperaturen über 250 °C nicht sinnvoll oder sogar nicht möglich ist.

Alternativ ist bekannt, Walzen induktiv aufzuheizen. Dabei wird kein Arbeitsmedium benötigt, sondern die Walze durch ein elektromagnetisches Feld induktiv aufgeheizt. Entsprechende induktive Heizungen haben eine kurze Vorlaufzeit und können vergleichsweise schnell eine Walze auf eine vorgegebene Temperatur erwärmen. Allerdings ist ein hoher apparativer Aufwand mit einer aufwendigen Verkabelung und Regelung notwendig. Induktive Heizungen sind zudem vergleichsweise teuer.

Als weitere Alternative sind elektrische Heizungen bekannt. Dabei ist eine Bohrung in der Walze vorgesehen, in die ein Heizelement eingeführt ist. Nachteilig hat sich allerdings erwiesen, dass die von dem Heizelement erzeugte Wärme wegen der Bohrung nicht gut auf die Walze übertragen werden kann.

Zum Einbau eines entsprechenden Heizelements in die Bohrung wird zur Montagevereinfachung das Heizelement mit einer Graphitpaste eingeschmiert, welche allerdings nach einer gewissen Betriebszeit verdampft. Die Wärmeübertragung findet dann nur noch über einen Luftspalt zwischen dem Heizelement und dem Walzenkörper der Walze statt, welcher durch die Passung vorgegeben ist. Damit ergibt sich eine deutlich verringerte Wärmeübertragung da zum einen der Umfang des Heizelements und damit ihre Oberfläche in radialer Richtung klein ist, und zum anderen die Walze und insbesondere die Luft, die sich nach dem Verdampfen der Graphitpaste in einem entsprechenden Luftspalt zwischen Heizelement und Walzenkörper befindet, eine deutlich geringe Wärmeleitfähigkeit besitzen. So hat beispielsweise Stahl S355, aus dem häufig der Walzenkörper besteht oder diesen zumindest aufweist, eine Wärmeleitfähigkeit von etwa 54 W/(m K), wohingegen Luft eine Wärmeleitfähigkeit von etwa 0,0262 W/(m K) aufweist. Der Luftspalt wirkt damit als Wärmeübertragungswiderstand.

Folglich kann im Betrieb die benötigte Leistung zur Erwärmung der Walzenoberfläche auf Soll-Temperatur häufig nicht erreicht werden. In einigen Fällen kann sich sogar das Heizelement aufgrund der mangelhaften Wärmeabfuhr derart erwärmen, dass es durchbrennt oder beschädigt wird.

Aus diesem Grund haben sich bisher elektrische Heizungen nicht bewährt, und sind Ölheizungen das häufig eingesetzte Mittel der Wahl.

Diese Nachteile werden durch eine erfindungsgemäße Heizvorrichtung nach Anspruch 1, eine erfindungsgemäße Walze nach Anspruch 9 und ein erfindungsgemäßer Kalander oder Prägekassette nach Anspruch 15 überwunden. Die jeweiligen Unteransprüche betreffen jeweils besonders vorteilhafte Ausführungsformen.

Es ist insbesondere eine Aufgabe der vorliegenden Erfindung, eine Heizvorrichtung, eine Walze und einen erfindungsgemäßer Kalander bereitzustellen, die eine schnelle Aufheizung einer Walze ermöglichen. Eine erfindungsgemäße Heizvorrichtung, und entsprechend eine erfindungsgemäße Walze bzw. Kalander oder Prägekassette, ist zudem einfach zu installieren und zu warten, sowie kostengünstig.

Es ist zudem einfach und unkompliziert möglich, bereits existierende Kalander und/oder Walzen mit einigen Ausführungsformen erfindungsgemäßer Heizvorrichtungen nachzurüsten.

Ein erster Aspekt der Erfindung betrifft eine Heizvorrichtung zum Beheizen einer Walze, wobei die Heizvorrichtung ein Heizelement aufweist, das dazu eingerichtet ist, in eine Bohrung der Walze eingesetzt zu sein und eine Heizleistung und/oder Wärme zum Beheizen der Walze und/oder eines Walzenkörpers der Walze bereitzustellen, und wobei die Heizvorrichtung ein Spannelement aufweist, das an einer Oberfläche des Heizelements angeordnet ist und das dazu eingerichtet ist, dass wenn die Heizvorrichtung in die Bohrung der Walze eingesetzt ist, eine Innenfläche der Bohrung zu kontaktieren und Wärme von dem Heizelement leitend an die Walze und/oder den Walzenkörper zu übertragen.

Das Spannelement kann die Oberfläche des Heizelements kontaktieren.

Das Heizelement kann dazu eingerichtet sein, die Heizleistung und/oder Wärme elektrisch bereitzustellen. Das Heizelement kann dazu eingerichtet sein, elektrische Energie in Wärme umzuwandeln. Das Heizelement kann eine Heizpatrone aufweisen oder sein, oder als solche bezeichnet sein oder werden. Das Heizelement kann ein Heizstab sein oder aufweisen.

Das Spannelement kann ringförmig sein. Das Spannelement kann ein Konus-Spannelement sein oder aufweisen.

Das Spannelement und/oder der Konus-Spannelement kann einen ersten Spannring mit einer ersten schrägverlaufenden Fläche und einen zweiten Spannring mit einer zweiten schrägverlaufenden Fläche aufweisen. Die erste Fläche und die zweite Fläche können einander kontaktieren und/oder abstützen. Die erste Fläche kann und die zweite Fläche können relativ zueinander und/oder aufeinander gleiten. Es kann vorgesehen sein, dass die erste schrägverlaufenden Fläche relativ zu einer geraden Fläche des ersten Spannrings geneigt ist. Es kann vorgesehen sein, dass die zweite schrägverlaufenden Fläche relativ zu einer geraden Fläche des zweiten Spannrings geneigt ist. Die jeweiligen Neigungswinkel können derart gewählt sein, dass wenn der erste Spannring und der zweite Spannring einander mit ihren schrägverlaufenden Flächen kontaktieren oder aufeinanderliegen, die entsprechenden geraden Flächen im Wesentlichen parallel zueinander ausgerichtet sein können. Ein Neigungswinkel der ersten schrägverlaufenden Fläche und/oder der zweiten schrägverlaufenden Fläche kann derart gewählt sein, dass Selbsthemmung auftreten kann, beispielsweise wenn die Heizvorrichtung in einer oder der Bohrung aufgenommen sein kann. Alternativ kann ein oder der Neigungswinkel der ersten schrägverlaufenden Fläche und/oder der zweiten schrägverlaufenden Fläche derart gewählt sein, dass keine Selbsthemmung auftreten kann, beispielsweise wenn die Heizvorrichtung in einer oder der Bohrung aufgenommen sein kann.

Das Spannelement kann eine variable und/oder verstellbare Dicke aufweisen. Die Dicke des Spannelements kann variabel und/oder verstellbar sein. Wenn der erste Spannring eine erste schrägverlaufenden Fläche und der zweite Spannring eine zweite schrägverlaufende Fläche aufweisen, so kann beispielsweise eine Dicke des Spannelements durch gleiten und/oder verschieben des erste Spannrings und des zweiten Spannrings relativ zueinander eingestellt und/oder variiert sein oder werden.

Das Spannelement kann eines, mehrere oder alle aus Messing, Bronze Aluminium, Kupfer und/oder Stahl aufweisen, und/oder Legierungen umfassend mindestens eines dieser. Das Spannelement kann aus einem oder mehreren aus Messing, Bronze, Aluminium, Kupfer und/oder Stahl bestehen. Das Spannelement kann eine Wärmeleitfähigkeit von 120 W / (m K) aufweisen. Das Spannelement kann eine Wärmeleitfähigkeit von mehr als 120 W / (m K) aufweisen. Der erste Spannring und/oder der zweite Spannring kann Messing, Bronze und/oder Stahl aufweisen, und/oder aus solchen bestehen.

Das Heizelement kann zylinderförmig sein. Das Heizelement kann stabförmig sein. Das Spannelement kann auf einer Mantelfläche des Heizelements angeordnet sein.

Das Heizelement einen Durchmesser kann zwischen 5 mm und 40 mm haben. Es kann vorgesehen sein, dass das Heizelement einen Durchmesser von 28 mm haben kann. In einigen Ausführungsformen kann das Heizelement einen Durchmesser zwischen 27 mm und 29 mm haben.

Das Spannelement kann eine Dicke von 2 mm bis 8 mm aufweisen. Es kann vorgesehen sein, dass das Spannelement eine Dicke von 4 mm aufweisen kann. In einigen Ausführungsformen kann das Spannelement eine Dicke von 3,5 mm bis 4,5 mm aufweisen.

Ein weiterer Aspekt der Erfindung betrifft eine Walze, die einen Walzenkörper mit einer oder mehreren Bohrungen hat, wobei die Walze eine erfindungsgemäße Heizvorrichtung aufweist, die in die Bohrung eingesetzt ist, wobei das Spannelement eine Innenfläche der Bohrung kontaktiert, so dass von dem Heizelement bereitgestellte Wärme durch das Spannelement leitend an den Walzenkörper und/oder die Walze übertragbar ist.

In einigen Ausführungsformen kann die Walze genau eine Bohrung aufweisen. In einigen Ausführungsformen kann die Walze mehr als eine Bohrung aufweisen. Hat die Walze mehr als eine Bohrung, so kann in mindestens einer, mehrerer oder allen Bohrungen ein entsprechendes Heizelement eingesetzt sein. Hat die Walze mehr als eine Bohrung, so können in einigen Ausführungsformen mindestens zwei, mehrere oder alle der Bohrungen unter einem Winkel zueinander angeordnet sein, z.B. unter einem Winkel von 60°. Mindestens eine der Bohrungen kann schräg verlaufen, z.B. schräg zu einer Symmetrieachse und/oder Längsachse der Walze.

Die Bohrung kann an oder in einer Symmetrieachse der Walze angeordnet sein. Die Bohrung kann sich in eine Längsrichtung der Walze erstrecken.

Die Heizvorrichtung kann in der Bohrung zwischen einem Adapter und einer Feder axial gelagert sein.

Ein Vorspannweg der Feder kann verstellbar sein. Der Vorspannweg der Feder kann verstellbar sein, so dass eine axiale Vorspannung auf die Heizvorrichtung einstellbar sein kann. Der Vorspannweg der Feder kann über eine Schraubverbindung verstellbar sein.

Die Bohrung kann einen Durchmesser zwischen 5 mm und 40 mm aufweisen. In einigen Ausführungsformen kann die Bohrung einen Durchmesser von 32 mm aufweisen. In einigen Ausführungsformen kann die Bohrung einen Durchmesser zwischen 30,5 mm und 33,5 mm aufweisen. Hat die Walze mehr als eine Bohrung, so kann vorgesehen sein, dass mindestens zwei, mehrere oder alle der Bohrungen den gleichen Durchmesser haben. Alternativ oder zusätzlich können mindestens zwei, mehrere oder alle der Bohrungen verschiedene Durchmesser haben. In einigen Ausführungsformen kann durch Bohrungen mit verschiedenen Durchmessern eine Aufnahme von verschiedenen Heizelementen und/oder Heizvorrichtungen ermöglicht und/oder erleichtert sein oder werden. In einigen Ausführungsformen kann durch Bohrungen mit verschiedenen Durchmessern die Aufnahme einer Heizvorrichtung /und/oder Heizvorrichtung flexibel ermöglicht sein oder werden.

Die Heizvorrichtung, oder zumindest das Heizelement, kann lösbar mit der Walze und/oder in der Bohrung befestigt sein. Die Heizvorrichtung, oder zumindest das Heizelement, kann über eine Schraubverbindung mit der Walze und/oder in der Bohrung befestigt sein. Die Heizvorrichtung, oder zumindest das Heizelement, kann lösbar an oder mit dem Walzenkörper und/oder einem Zapfen der Walze befestigt sein. Die Heizvorrichtung, oder zumindest das Heizelement, kann über eine Schraubverbindung an oder mit dem Walzenkörper und/oder einem Zapfen der Walze befestigt sein.

Noch ein weiterer Aspekt der Erfindung betrifft einen Kalander, der mindestens eine erfindungsgemäße Walze aufweist. Alternativ oder zusätzlich betrifft die Erfindung eine Prägekassette, die mindestens eine erfindungsgemäße Walze aufweist.

Der Kalander kann ein Walzenpaar aufweisen, das zwei erfindungsgemäße Walzen umfassen kann, wobei die Walzen des Walzenpaars mit entsprechenden Heizvorrichtungen beheizt sein können. Die Prägekassette kann ein Walzenpaar aufweisen, das zwei erfindungsgemäße Walzen umfassen kann, wobei die Walzen des Walzenpaars mit entsprechenden Heizvorrichtungen beheizt sein können.

Die Erfindung wird anhand der nachfolgenden Figuren weiter erläutert. Es zeigen:
- Fig. 1:: eine aus dem Stand der Technik bekannte Walze;
- Fig. 2:: einen Vergleich eines Ausschnitts einer aus dem Stand der Technik bekannten Walze und eines Ausschnitts einer erfindungsgemäßen Walze;
- Fig. 3:: eine Ausführungsform einer erfindungsgemäßen Walze; und
- Fig. 4:: einen Vergleich eines zeitlichen Temperaturverlaufs einer aus dem Stand der Technik bekannten beheizten Walze und einer erfindungsgemäßen beheizten Walze.

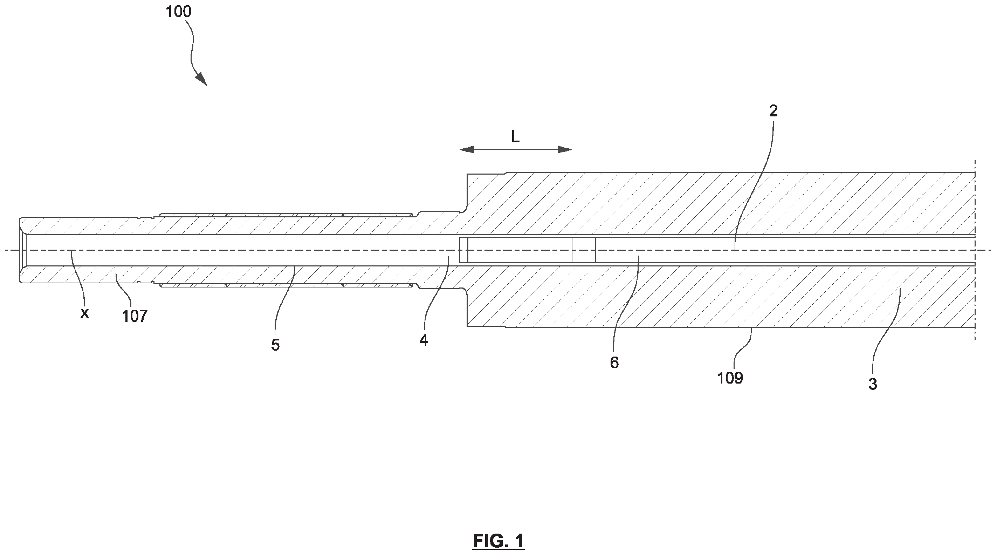

Figur 1 zeigt eine aus dem Stand der Technik bekannte Walze 100. Die Walze 100 weist einen Walzenkörper 3 auf. Die Walze 100 kann eine Kalanderwalze sein oder aufweisen. Die Walze 100 kann eine Prägewalze sein oder aufweisen. Die Walze 100 kann eine Gravurwalze sein oder aufweisen. Der Walzenkörper 3 kann eine Walzenoberfläche 109 aufweisen, die zum Kalandrieren und/oder Prägen verwendet werden kann. Die Walze 100 kann in einigen Ausführungsformen zum Gravieren, Bedrucken und/oder Perforieren eingerichtet und/oder verwendet sein oder werden. Die Walze 100 kann dazu eingerichtet sein, in oder mit einem Kalander und/oder einer Prägekassette verwendet und/oder eingesetzt zu sein oder werden.

Die Walze 100 und/oder der Walzenkörper 3 kann zylinderförmig und/oder stabförmig sein. Die Walzenoberfläche 109 kann einer Mantelfläche der Walze 100 entsprechen. Die Walze 100 kann einen Zapfen 107 aufweisen. Der Zapfen 107 kann der Lagerung dienen. Die Walze 100 kann z.B. mit dem Zapfen 107 eingespannt sein. Es kann vorgesehen sein, dass jeweils ein Zapfen 107 an gegenüberliegenden Enden des Walzenkörpers 3 angeordnet sein können. Die Walze 100 kann eine Drehachse X aufweisen, um die sie drehbar sein kann, beispielsweise drehbar gelagert sein kann. Die Walze 100 weist eine Bohrung 4 auf. In einigen Ausführungsformen kann sich die Bohrung 4 vollständig durch die Walze 100 erstrecken. Es kann vorgesehen sein, dass sich die Bohrung 4 entlang einer Längsrichtung L der Walze 100 erstreckt. In einigen Ausführungsformen kann sich die Bohrung 4 entlang einer Symmetrieachse der Walze 100, beispielsweise einer Längsachse und/oder der Drehachse X erstrecken. Es kann vorgesehen sein, dass die Bohrung 4, und/oder eine Erstreckungsachse der Bohrung 4 im Wesentlichen mit einer oder der Symmetrieachse, Längsachse und/oder Drehachse X der Walze 100 zusammenfallen kann.

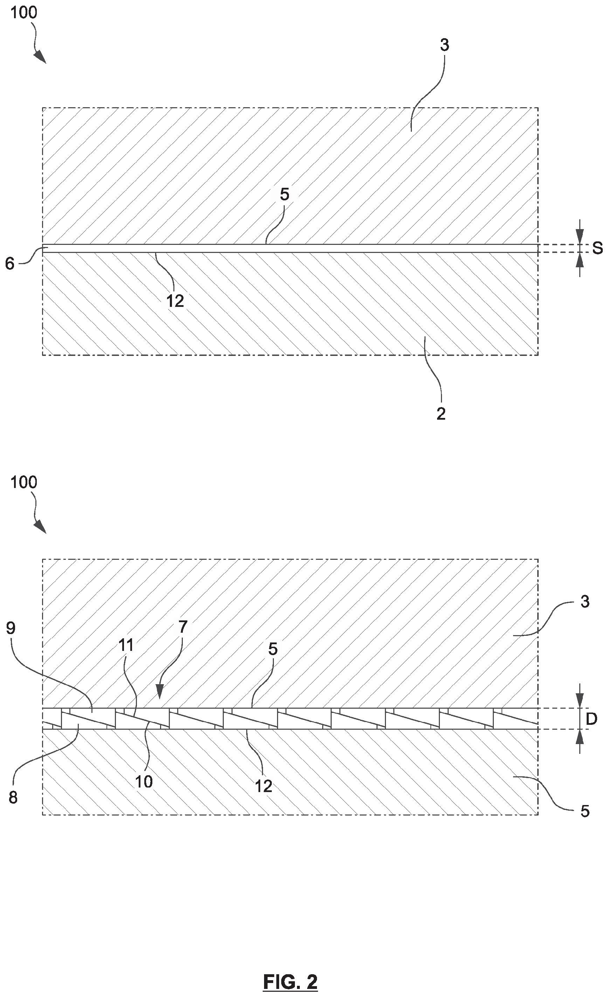

Bei der aus dem Stand der Technik bekannten Walze 100 ist ein Heizelement 2 in der Bohrung 4 vorgesehen. Das Heizelement 2 kann beispielsweise ein Heizstab sein und/oder aufweisen. Dabei befindet sich zwischen dem Heizelement 2 und einer Innenfläche 5 der Bohrung 4 ein Luftspalt 6. Figur 2 (oberen Abbildung) zeigt einen entsprechenden Ausschnitt einer aus dem Stand der Technik bekannten Walze 100. Bei den aus dem Stand der Technik bekannten Walzen 100 kann damit das Heizelement 2 nicht den Walzenkörper 3 und/oder die Bohrung 4 kontaktieren, sondern ist durch den Luftspalt 6 von diesem getrennt. Der Luftspalt 6 kann sich zwischen einer Mantelfläche 12 des Heizelements 2 und einer Innenfläche 5 der Bohrung 4 befinden, und/oder durch diese gebildet sein. Der Luftspalt 6 kann dabei eine Dicke S haben, die bei den aus dem Stand der Technik bekannten Ausführungsformen der Walze 100 einige Millimeter betragen kann. Damit wirkt der Luftfahrt 6 wie eine Isolation zwischen Heizelement 2 und Walzenkörper 3. Somit ist eine Übertragung der von dem Heizelement 2 erzeugten Wärme an den Walzenkörper 3 durch den Luftspalt 6 reduziert und/oder eingeschränkt. Damit ergibt sich zum einen eine langsame Aufheizung der Walze 100 und/oder des Walzenkörpers 3, als auch eine verringerte Höchsttemperatur. Zudem kann in einigen Fällen das Heizelement 2 durch Hitze beschädigt sein oder werden, da die von ihm erzeugte Wärme nicht gut abgeführt sein oder werden kann.

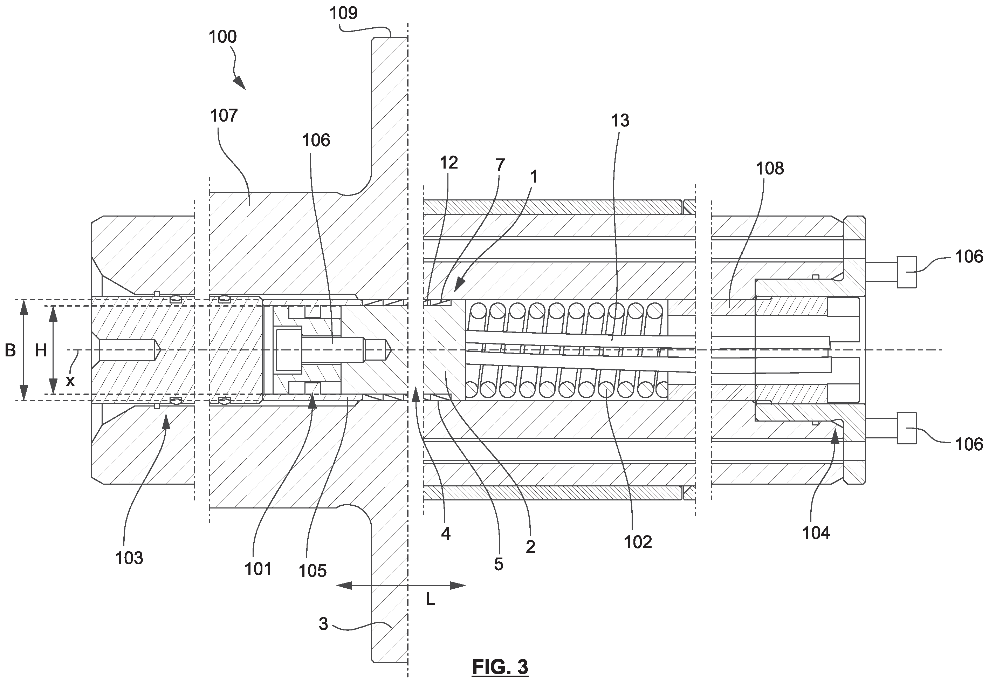

Ein Ausschnitt eines Ausführungsbeispiels einer erfindungsgemäßen Walze 100 und einer erfindungsgemäße Walze 100 mit jeweils erfindungsgemäßen Heizvorrichtungen 1 ist in Figur 2 (unten) und Figur 3 gezeigt.

Die erfindungsgemäße Heizvorrichtung 1 weist ein Heizelement 2 und ein Spannelement7 auf. Das Heizelement 2 kann dabei dem aus dem Stand der Technik bekannten Heizelement 2 entsprechen. Das Heizelement 2 kann in eine oder die Bohrung 4 der Walze 100 eingesetzt sein oder werden. Das Heizelement 2 kann eine Heizleistung und/oder Wärme zum Beheizen der Walze 100 und/oder des Walzenkörpers 3 bereitstellen. Beispielsweise kann das Heizelement 2 die Heizleistung und/oder Wärme elektrisch bereitstellen, und/oder aus elektrischer Energie erzeugen und/oder wandeln. Das Heizelement 2 kann z.B. ein Heizstab sein oder aufweisen.

Das Spannelement 7 ist an einer Oberfläche des Heizelements 2 angeordnet. Das Heizelement 2 kann zylinderförmig und/oder stabförmig sein. Die Oberfläche kann beispielsweise eine Mantelfläche 12 des Heizelements 2 sein und/oder einer solchen entsprechen. Wenn die Heizvorrichtung 1 in eine oder die Bohrung 4 der Walze 100 eingesetzt ist, kann eine oder die Innenfläche 5 der Bohrung 4 von dem Spannelement 7 kontaktiert sein oder werden. Damit kann Wärme von dem Heizelement 2 leitend an die Walze 100 und/oder den Walzenkörper 3 übertragen werden. Das Spannelement 7 kann eine Wärmeleitung zwischen Heizelement 2 und Walzenkörper 3 bewirken und/oder bereitstellen.

Insbesondere kann das Spannelement 7 einen oder den Luftspalt 6 ausfüllen, in einigen Ausführungsformen im Wesentlichen vollständig ausfüllen. Das Spannelement 7 kann ringförmig sein und/oder einen oder mehrere Spannringe aufweisen. Es kann vorgesehen sein, dass das Spannelement 7 einen ersten Spannring 8 und ein zweiten Spannring 9 aufweist, und/oder aus einem oder mehreren ersten Spannringen 8 und zweiten Spannringen 9 besteht. Das Spannelement 7 kann ein Konus-Spannelement sein oder aufweisen. Der Konus-Spannelement kann den ersten Spannring 8 und den zweiten Spannring 9 aufweisen. Das Spannelement 7 kann konusförmig sein. Der erste Spannring 8 und/oder der zweiten Spannring 9 kann konusförmig sein.

Wenn das Spannelement 7 ringförmig ist, so kann sich aufgrund der größeren Oberfläche an der Außenseite des ringförmigen Spannelement 7 (die die Innenfläche 5 der Bohrung 4 kontaktieren kann, und/oder die im Wesentlichen einer geraden Fläche des zweiten Spannrings 9 bzw. der zweiten Spannringe 9 entsprechen kann) verglichen zu der kleineren Oberfläche des Heizelements 2 (die z.B. die innere Fläche des ringförmigen Spannelements 7 kontaktieren kann, und/oder die im Wesentlichen einer geraden Fläche des ersten Spannrings 8 bzw. der ersten Spannringe 8 entsprechen kann) eine erhöhte effektive Oberfläche und/oder eine bessere Wärmeübertragung ergeben.

Der erste Spannring 8 kann eine schrägverlaufende erste Fläche 10 aufweisen. Der erste Spannring 8 kann eine im Wesentlichen gerade verlaufende Fläche aufweisen, die der schrägverlaufenden ersten Fläche 10 gegenüberliegend angeordnet sein kann. Die erste Fläche 10 kann relativ zu der gerade verlaufenden Fläche schräg verlaufen und/oder geneigt sein. Der erste Spannring 8 kann keilförmig sein und/oder eine Keilform aufweisen. Der zweite Spannring 9 kann eine schrägverlaufende zweite Fläche 11 aufweisen. Der zweite Spannring 9 kann eine im Wesentlichen gerade verlaufende Fläche aufweisen, die der schrägverlaufenden zweiten Fläche 11 gegenüberliegend angeordnet sein kann. Die zweite Fläche 11 kann relativ zu der gerade verlaufenden Fläche schräg verlaufen und/oder geneigt sein. Der zweite Spannring 9 kann keilförmig sein und/oder eine Keilform aufweisen.

Es kann vorgesehen sein, dass die gerade verlaufende Fläche des ersten Spannrings 8 das Heizelement 2, und/oder dessen Oberfläche und/oder Mantelfläche 12, kontaktieren kann, beispielsweise flächig kontaktieren kann. Die gerade verlaufende Fläche des ersten Spannring 8 kann auf dem Heizelement 2, und/oder dessen Oberfläche und/oder Mantelfläche 12, aufliegen und/oder von diesem gestützt sein oder werden. Die gerade verlaufende Fläche des zweiten Spannrings 9 kann den Walzenkörper 3 und/oder die Bohrung 4, und/oder deren Innenfläche 5, kontaktieren, beispielsweise flächig kontaktieren. Die gerade verlaufende Fläche des zweiten Spannring 9 kann auf dem Walzenkörper 3 und/oder der Bohrung 4, und/oder deren Innenfläche 5, aufliegen und/oder von diesem gestützt sein oder werden.

Ein jeweiliger Neigungswinkel der ersten schrägverlaufenden Fläche 10 und der zweiten schrägverlaufenden Fläche 11 kann derart gewählt sein, dass wenn der erste Spannring 8 und der zweite Spannring 9 einander über die jeweiligen schrägverlaufenden Flächen 10, 11 kontaktieren und/oder aufeinanderliegen, die jeweiligen gerade verlaufenden Flächen der Spannring 8, 9 parallel zueinander ausgerichtet sind und/oder parallel zueinander verlaufen. Ein oder deren jeweilige Neigungswinkel kann in einigen Ausführungsformen derart gewählt sein oder werden, dass Selbsthemmung auftreten kann. In einigen Ausführungsformen kann aber auch ein oder derjenige Neigungswinkel derart gewählt sein oder werden, dass keine Selbsthemmung auftreten kann. Es kann vorgesehen sein, den oder die Neigungswinkel derart zu wählen, dass die Heizvorrichtung 1, das Heizelement 2 und/oder das Spannelement 7 einfach aus der Bohrung 4 entnommen werden kann.

Das Spannelement 7 kann eine Mehrzahl oder Vielzahl erster Spannringe 8 aufweisen. Das Spannelement 7 kann eine Mehrzahl oder Vielzahl erster Spannringe 9 aufweisen. Jeweils ein erster Spannring 8 und ein zweiter Spannring 9 können aufeinanderliegen und/oder einander im Wesentlichen in radialer Richtung kontaktieren. Benachbarte erste Spannringe 8 und/oder zweite Spannringe 9 können einander seitlich und/oder axial kontaktieren und/oder sichern. In einigen Ausführungsformen kann ein erster Spannring 8 einen benachbarten zweiten Spannringe 9 seitlich und/oder axial kontaktieren und/oder sichern. In einigen Ausführungsformen kann ein zweiter Spannring 9 einen benachbarten ersten Spannringe 8 seitlich und/oder axial kontaktieren und/oder sichern.

Der erste Spannring 8 und der zweite Spannring 9 können derart angeordnet sein, dass sich die schrägverlaufende erste Fläche 10 und die schrägverlaufende zweite Fläche 11 jeweils kontaktieren. Der erste Spannring 8 und/oder der zweite Spannring 9 können relativ zueinander gleiten und/oder bewegt sein. Durch die schrägverlaufenden Flächen des ersten Spannring 8 und des zweiten Spannring 9 kann eine Dicke D des Spannelements 7 eingestellt und/oder variiert sein oder werden. Damit kann eine gute Kontaktierung zwischen Heizelement 2 und Walzenkörper 3 durch das Spannelement 7 sichergestellt sein oder werden. Zudem kann durch die einstellbare und/oder variable Dicke D des Spannelements 7 Luftspalte 6 verschiedener Dicke S gut überbrückt und/oder ausgefüllt sein oder werden. Es kann vorgesehen sein, dass das Spannelement 7, und/oder der erste Spannringe 8 und zweite Spannring 9 (bzw. mehrere erste Spannringe 8 und entsprechen mehrere zweite Spannringe 9) derart relativ zueinander verschoben in der Bohrung 4 fixiert und/oder gesichert sind, dass eine Dicke D des Spannelements 7 erreicht wird und/oder das Spannelement 7 eine vorgegebene Dicke D hat.

Das Spannelement 7 kann aus einem Material bestehen oder ein Material aufweisen, das eine gute Wärmeleitfähigkeit haben kann. Der erste Spannring 8 und/oder der zweite Spannring 9 kann aus einem Material bestehen oder ein Material aufweisen, das eine gute Wärmeleitfähigkeit haben kann. In einigen Ausführungsformen kann das Material ein Stahl, Bronze und/oder Messing sein oder aufweisen. Das Material kann aus einer Zusammensetzung mehrerer Stoffe bestehen und/oder mehrere Stoffe aufweisen. In einigen Ausführungsformen kann das Material eine Legierung sein oder aufweisen. In einigen Ausführungsformen kann das Spannelement 7 eine Wärmeleitfähigkeit von 120 W / (m K) haben. In einigen Ausführungsformen kann das Spannelement 7 eine Wärmeleitfähigkeit von mehr als 120 W / (m K) haben. In einigen Ausführungsformen kann vorgesehen sein, dass der erste Spannring 8 und der zweite Spannring 9 aus verschiedenen Materialien bestehen und/oder verschiedene Materialien aufweisen. Alternativ kann vorgesehen sein, dass der erste Spannring 8 und der zweite Spannring 9 aus demselben Material bestehen und/oder aufweisen.

In Figur 3 sind verschiedene Ausschnitte und/oder Abschnitte erfindungsgemäßen Ausführungsform einer erfindungsgemäßen Walze 100 gezeigt. Die Walze 100 weist einen Walzenkörper 3 auf. Die Walze 100 weist eine Bohrung 4 auf. In die Bohrung 4 ist eine erfindungsgemäße Heizvorrichtung 1 eingesetzt. Die Walze 100 und/oder die Heizvorrichtung 1 kann eines, mehrere oder alle Merkmale und/oder Vorteile vorstehend beschriebener Walze 100 und/oder Heizvorrichtung 1 aufweisen.

Es kann eine Spielpassung des Heizelement 2 in der Bohrung 4 vorgesehen sein. Die Spielpassung kann durch das Spannelement 7 überbrückt und/oder ausgefüllt sein. Das Heizelement 2 kann einen Durchmesser H zwischen 5 mm und 40 mm haben. Das Heizelement 2 kann einen Durchmesser H zwischen 27 mm und 29 mm haben. Es kann auch vorgesehen sein, dass das Heizelement 2 einen Durchmesser H von 28 mm hat. Die Bohrung 4 kann einen Durchmesser B zwischen 5 mm und 40 mm aufweisen. Die Bohrung 4 kann einen Durchmesser B zwischen 30,5 mm und 33,5 mm aufweisen. Es kann vorgesehen sein, dass die Bohrung 4 einen Durchmesser B von 32 mm aufweisen kann. Das Spannelement 7 kann eine Dicke D von 2 mm bis 8 mm aufweisen. In einigen Ausführungsformen kann das Spannelement 7 kann eine Dicke D von 3,5 mm bis 4,5 mm aufweisen. Es kann vorgesehen sein, dass das Spannelement 7 eine Dicke D von 4 mm aufweisen kann.

Die Walze 100 und/oder der Walzenkörpers 3 kann stabförmig und/oder zylinderförmig sein. Die Walze 100 und/oder der Walzenkörper 3 kann eine Walzenoberfläche 109 aufweisen, die zum Kalandrieren und/oder Prägen dienen und/oder verwendet sein oder werden kann. Die Walzenoberfläche 109 kann eine außenliegende Mantelfläche des Walzenkörpers 3 sein oder umfassen. Die Walze 100 kann einen oder mehrere Zapfen 107 aufweisen. Der Zapfen 107 kann distal angeordnet sein. Der Zapfen 107 kann an einem Ende des Walzenkörpers 3 angeordnet sein. Es kann vorgesehen sein, dass an gegenüberliegenden Enden des Walzenkörpers 3 jeweils ein Zapfen ein und 7 angeordnet sein kann. Der Zapfen 107 kann der Lagerung der Walze 100 dienen, z.B. in einem Wälzlager oder Drehlager. Die Walze 100 kann über den Zapfen 107 eingespannt sein.

Die Bohrung 4 kann sich zumindest teilweise oder vollständig durch die Walze 100 und/oder den Walzenkörper 3 erstrecken. Die Bohrung 4 kann entlang einer Längsrichtung L der Walze 100 und/oder des Walzenkörpers 3 angeordnet sein. Die Bohrung 4 kann im Wesentlichen parallel zu der Längsrichtung L und/oder einer Erstreckungsrichtung der Kalanderwalze 100 und/oder des Walzenkörpers 3 angeordnet sein und/oder verlaufen. Es kann vorgesehen sein, dass die Bohrung 4 mittig angeordnet sein kann. Die Bohrung 4 kann im Wesentlichen mit einer oder der Drehachse X der Walze 100 zusammenfallen.

Die Heizvorrichtung 1 und/oder das Heizelement 2 ist dazu eingerichtet, die Walze 100 und/oder den Walzenkörper 3 zu beheizen. Durch Heizvorrichtung 1 und/oder das Heizelement 2 kann die Walze 100 und/oder der Walzenkörpers 3 auf eine Temperatur, beispielsweise eine vorgegebene Temperatur, erwärmt sein oder werden. In einigen Ausführungsformen kann vorgesehen sein, dass sie Temperatur steuerbar und/oder regelbar sein kann, und/oder vorgegeben sein oder werden kann.

Das Heizelement 2 kann Zylinder und/oder stabförmig sein. Das Heizelement 2 kann eine Oberfläche, beispielsweise an einem Mantelfläche 5 aufweisen. Das Spannelement 7 kontaktiert das Heizelement 2, beispielsweise dessen Oberfläche und/oder Mantelfläche 5. Das Spannelement 7 kontaktiert eine Innenfläche 5 der Bohrung 4. Das Spannelement 7 kann damit Wärme von dem Heizelement 2 an die Innenfläche 5 der Bohrung 4, und/oder den Walzenkörpers 3 und/oder die Walze 100, übertragen, insbesondere durch Wärmeleitung. Das Spannelement 7 kann beispielsweise einen oder mehrere vorstehend beschriebene erste Spannringe 8 und zweite Spannringe 9 aufweisen.

In Figur 3 ist eine beispielsweise Aufnahme und/oder Befestigung der Heizvorrichtung 1 in der Bohrung 4 gezeigt. Die Heizvorrichtung 1 kann in Axialrichtung, insbesondere in Längsrichtung L, gesichert sein. Die Walze 100 kann einen Adapter 101 und eine Schraubverbindung 104 aufweisen, die die Heizvorrichtung 1 und/oder das Heizelement 2 axial sichern können. Die Heizvorrichtung 1 kann in der Bohrung 4 in Axialrichtung zwischen dem Adapter 101 und der Schraubverbindung 104 angeordnet sein.

Der Adapter 101 kann die Heizvorrichtung 1 und/oder das Heizelement 2 in Axialrichtung kontaktieren, und/oder einer Verschiebung und/oder Bewegung der Heizvorrichtung 1 und/oder des Heizelements 2 in mindestens eine Richtung parallel zur Axialrichtung entgegenwirken. In einigen Ausführungsformen kann der Adapter 101 eine Hülse 105 aufweisen, die die Heizvorrichtung 1 und/oder das Heizelement 2 kontaktieren kann, beispielsweise seitlich kontaktieren kann. Der Adapter 101 und/oder die Hülse 105 kann eine Kraft, die eine Bewegung der Heizvorrichtung 1 und/oder des Heizelements 2 in eine Richtung verhindern kann, ausüben. Beispielsweise kann bei der in Figur 3 gezeigten Anordnung der Adapter 101 und/oder die Hülse 105 eine Bewegung der Heizvorrichtung 1 und/oder des Heizelements 2 in der Bohrung 4 "nach links" in Figur 3 entgegenwirken und/oder verhindern.

In einigen Ausführungsformen kann der Adapter 101 und/oder die Hülse 105 das Spannelement 7 kontaktieren, z.B. seitlich kontaktieren, und/oder eine axiale Bewegung des Spannelements 7 in mindestens eine Richtung sperren und/oder entgegenwirken. In einigen Ausführungsformen kann das Heizelement 2 einen Anschlag aufweisen, den das Spannelement 7 kontaktieren kann. In einigen Ausführungsformen kann das Spannelement 7 gegen den Anschlag geführt und/oder gepresst sein. Es kann vorgesehen sein, dass der Adapter 101 und/oder die Hülse 105 das Spannelement 7 gegen den Anschlag schieben und/oder pressen kann, und/oder der Adapter 101 und/oder die Hülse 105 zusammen mit dem Anschlag das Spannelement 7 axial sichern oder sperren kann.

Der Adapter 101 kann beispielsweise über eine lösbare Verbindung, z.B. mit einer oder mehreren Schrauben 106, befestigt sein. Es kann vorgesehen sein, dass der Adapter 101 an oder mit der Heizvorrichtung 1 und/oder dem Heizelement 2 befestigt oder montiert sein kann. In einigen Ausführungsformen kann der Adapter 101 über eine oder die lösbare Verbindung, z.B. mit einer oder mehreren Schrauben 106, mit der Heizvorrichtung 1 und/oder dem Heizelement 2 verschraubt und/oder befestigt sein kann. In einigen Ausführungsformen kann ein zweiter Adapter 103 vorgesehen sein, der den Adapter 101 axial sichern kann und/oder eine Kraft auf den Adapter 101 ausüben kann, die eine Bewegung und/oder Verschiebung des Adapters 101 in eine Richtung, beispielsweise parallel zur Längsrichtung L und/oder einer Axialrichtung, entgegenwirken, sperren und/oder verhindern kann. Es kann vorgesehen sein, dass der zweite Adapter 103 beispielsweise mit dem Zapfen 107 verschraubt und/oder an diesem befestigt sein kann.

Die Schraubverbindung 104 kann einer Verschiebung und/oder Bewegung der Heizvorrichtung 1 und/oder des Heizelements 2 in mindestens eine Richtung parallel zur Axialrichtung entgegenwirken. Die Richtung kann derjenigen Richtung, in die eine Bewegung durch den Adapter 101 verhindert und/oder gesperrt sein kann, entgegengesetzt sein. In einigen beispielhaften Ausführungsformen kann die Schraubverbindung 104 die Heizvorrichtung 1 und/oder das Heizelement 2 in Axialrichtung kontaktieren. In einigen Ausführungsformen kann eine Feder 102 vorgesehen sein, die zwischen der Heizvorrichtung 1 und der Schraubverbindung 104 angeordnet sein kann. In einigen Ausführungsformen kann die Schraubverbindung 104 ein Druckstück 108 aufweisen, das auf die Feder 102 wirken kann. Die Feder 102 kann die Heizvorrichtung 1 und/oder das Heizelement 2 kontaktieren, beispielsweise seitlich kontaktieren. Bei dem in Figur 3 gezeigten Ausführungsbeispiel kann die Schraubverbindung 104 und/oder die Feder beispielsweise einer Bewegung und/oder Verschiebung der Heizvorrichtung 1 und/oder des Heizelements 2 in der Bohrung 4 "nach rechts" entgegenwirken und/oder sperren.

Die Schraubverbindung 104 kann lösbar befestigt sein, z.B. über eine oder mehrere Schrauben 106. In einigen Ausführungsformen kann die Schraubverbindung 104 an oder mit der Walze 100 und/oder einem Zapfen 107 befestigt sein.

Durch die Schraubverbindung 104 kann eine Vorspannung der Feder 102, und/oder eine von der Feder 102 auf die Heizvorrichtung 1 und/oder das Heizelement 2 ausgeübte Kraft, insbesondere Federkraft, eingestellt sein oder werden. Durch die Schraubverbindung 104 kann ein Federweg und/oder eine Rückstellkraft der Feder 102 eingestellt sein oder werden. Die Feder 102 kann als Druckfeder wirken. Die Feder 102 kann auf die Heizvorrichtung 1 und/oder das Heizelement 2 eine Federdruck und/oder eine Federkraft ausüben. Die Feder 102 kann eine Spiralfeder sein. In einigen Ausführungsformen kann alternativ oder zusätzlich das Druckstück 108 derart dimensioniert sein, insbesondere eine derartige Länge aufweisen, dass eine vorgegebene Federkraft und/oder ein vorgegebener Federweg der Feder 102 eingestellt sein oder werden kann.

Die Heizvorrichtung 1 und/oder das Heizelement 2 kann lösbar in der Bohrung 4 aufgenommen sein. Die Heizvorrichtung 1 und/oder das Heizelement 2 kann lösbar an oder mit der Walze 100 und/oder dem Walzenkörper 3 befestigt sein. Das Spannelement 7 kann lösbar in der Bohrung 4 aufgenommen sein. Das Spannelement kann lösbar an oder mit der Walze 100 und/oder dem Walzenkörper 3 befestigt sein. Damit kann die Heizvorrichtung 1, das Heizelement 2 und/oder das Spannelement einfach und unkompliziert montiert oder demontiert sein oder werden. Beispielsweise kann ein defektes Heizelement 2 einfach und schnell ausgetauscht werden. Es ist zudem möglich, bereits aufgestellte Walzen oder Kalander mit einer erfindungsgemäßen Heizvorrichtung 1 einfach und unkompliziert nachzurüsten.

In einigen Ausführungsformen kann mit Bezugszeichen 13 in Figur 3 z.B. ein Kabel, eine elektrische Leitung, ein Schlauch und/oder eine Kabeldurchführung bezeichnet sein. In einigen Ausführungsformen kann durch ein Kabel und/oder eine elektrische Leitung Energie, beispielsweise elektrische Energie, der Heizvorrichtung 1 und/oder dem Heizelement 2 bereitgestellt und/oder zugeführt sein oder werden, die von dem Heizelement 2 in Wärme gewandelt sein oder werden kann.

Auch wenn das Heizelement 2 ein elektrisches Heizelement sein oder aufweisen kann, oder zumindest dazu eingerichtet sein kann, Wärme aus elektrischer Energie zu gewinnen und/oder zu wandeln, ist die Erfindung nicht zwingen auf solche beschränkt. Es sind auch andere Heizelemente 2 denkbar, die Wärme auf andere Art gewinnen, wandeln oder zumindest bereitstellen.

Die Walze 100 kann Teil eines (nicht in den Figuren gezeigten) Kalenders sein. Ein Kalander kann eine oder mehrere erfindungsgemäße Walze 100 aufweisen. Beispielsweise kann ein Kalander mindestens ein Walzenpaar aufweisen, dass durch erfindungsgemäße Walze 100 gebildet sein kann.

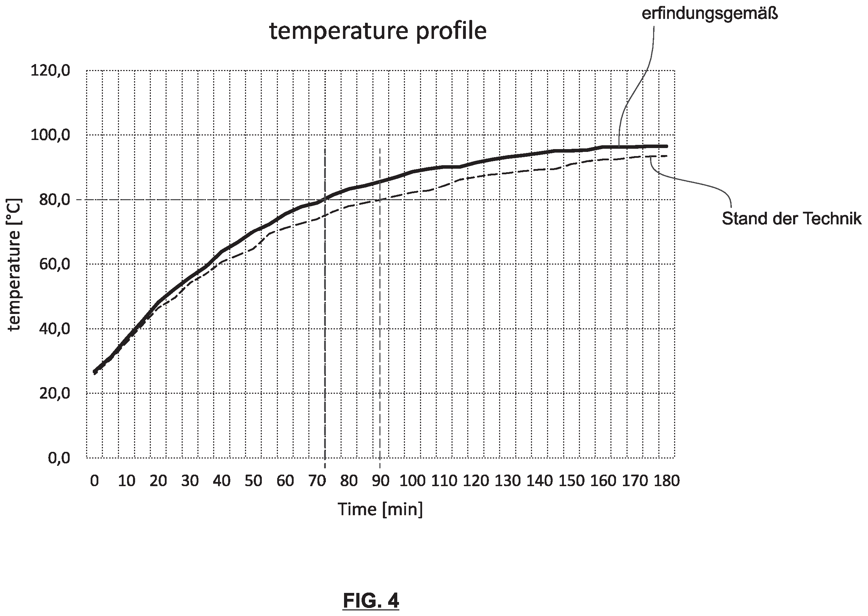

Figur 4 zeigt beispielhafte Temperaturverläufe einer erfindungsgemäßen Walze 100 verglichen mit einer aus dem Stand der Technik bekannten Walze 100 als Funktion einer Zeit. Die erfindungsgemäße Walze 100 kann dabei eine in Figur 2 (unten) und Figur 3 gezeigten und beschriebenen Walze 100 entsprechen. Die aus dem Stand der Technik bekannte Walze 100 kann einer in Figur 1 und Figur 2 (oben) gezeigten und beschriebenen Walze 100 entsprechen.

Die beiden verglichen Walzen 100 unterscheiden sich dabei lediglich durch die Heizvorrichtung 1, bzw. das Spannelement 7. In anderen Worten haben die jeweiligen Walzenkörper 3 und Bohrungen 4 dieselben Abmessungen. Beide Walze 100, d. h. sowohl die erfindungsgemäße Walze 100 als auch die aus dem Stand der Technik bekannte Walze 100, wurden dabei an ihre Außenfläche, bzw. der Oberfläche der jeweiligen Walzenkörper 3, gekühlt, um ein entsprechendes Abkühlen der Walzenoberflächen im Betrieb abzubilden. Die jeweiligen Temperaturen wurden an den gleichen Stellen mittig (in radialer Richtung) im Walzenkörper 3 parallel zu den jeweiligen Drehachsen X gemessen. Den jeweiligen Heizelementen 2 wurde gleich viel Energie zugeführt.

Wie aus Figur 4 ersichtlich, ermöglicht eine erfindungsgemäße Heizvorrichtung 1 eine Aufheizung einer erfindungsgemäßen Walze 100 auf eine Temperatur von 80 °C innerhalb einer Zeit von ungefähr 72,5 Minuten. Demgegenüber wird für eine Aufheizung eine aus dem Stand der Technik bekannten Walze 100 eine Zeit von ungefähr 90 Minuten benötigt. Die vorliegende Erfindung ermöglicht damit eine deutliche Reduzierung einer zum Aufheizen auf eine vorgegebene Temperatur benötigte Zeit und stellt damit eine um eine Zeitdifferenz Δt verkürzte Aufheizung bereit. Da die jeweiligen Temperaturverläufe konkav verlaufen, ist die Zeitdifferenz Δt zu dem höher, je höher die gewünschte Temperatur bzw. eingestellte Zieltemperatur ist.

Ein Wärmeübertragungskoeffizient α der Wärmeübertragung von Heizelement 2 zu Walzenkörper 3 kann durch die vorliegende Erfindung um einen Faktor 1,2 oder mehr, z.B. um einen Faktor 1,24, größer als aus dem Stand der Technik bekannt sein.

Die in den Ansprüchen, der Beschreibung und den Figuren offenbarten Merkmale können einzeln oder in beliebiger Kombination für die Verwirklichung der Erfindung wesentlich sein.

Weitere nicht einschränkende Ausführungsformen oder Aspekte sind in den folgenden Beispielen dargelegt.

### Beispiele

1. Heizvorrichtung (1) zum Beheizen einer Walze (100), wobei die Heizvorrichtung (1) ein Heizelement (2) aufweist, das dazu eingerichtet ist, in eine Bohrung(4) der Walze (100) eingesetzt zu sein und eine Heizleistung und/oder Wärme zum Beheizen der Walze (100) und/oder eines Walzenkörpers (3) der Walze (100) bereitzustellen, bevorzugt elektrisch bereitzustellen, und wobei die Heizvorrichtung (1) ein Spannelement (7) aufweist, das an einer Oberfläche (12) des Heizelements (2) angeordnet ist und das dazu eingerichtet ist, dass wenn die Heizvorrichtung (1) in die Bohrung (4) der Walze (100) eingesetzt ist, eine Innenfläche der Bohrung (4) zu kontaktieren und Wärme von dem Heizelement (2) leitend an die Walze (100) und/oder den Walzenkörper (3) zu übertragen.
2. Heizvorrichtung (1) nach Beispiel 1, bei der das Spannelement (7) ringförmig ist und/oder ein Konus-Spannelement ist oder aufweist.
3. Heizvorrichtung (1) nach einem der vorangegangenen Beispiele, bei der das Spannelement (7) einen ersten Spannring (8) mit einer ersten schrägverlaufenden Fläche (10) und einen zweiten Spannring (9) mit einer zweiten schrägverlaufenden Fläche (11) aufweist, wobei die erste Fläche (8) und die zweite Fläche (9) einander kontaktieren und/oder abstützen.
4. Heizvorrichtung (1) nach einem der vorangehenden Beispiele, bei der das Spannelement (7) eine variable und/oder verstellbare Dicke (D) aufweist.
5. Heizvorrichtung (1) nach einem der vorangehenden Beispiele, bei der das Spannelement (7) eines, mehrere oder alle aus Messing, Bronze, Aluminium, Kupfer und/oder Stahl aufweist, oder aus einem, mehreren oder allen aus Messing, Bronze, Aluminium, Kupfer und/oder Stahl besteht.
6. Heizvorrichtung (1) nach einem der vorangehenden Beispiele, bei der das Heizelement (2) zylinderförmig und/oder stabförmig ist, wobei das Spannelement (7) auf einer Mantelfläche (12) des Heizelements (2) angeordnet ist.
7. Heizvorrichtung (1) nach einem der vorangehenden Beispiele, bei der das Heizelement (2) einen Durchmesser (H) zwischen 5 mm und 40 mm hat, bevorzugt einen Durchmesser (H) von 28 mm hat.
8. Heizvorrichtung (1) nach einem der vorangehenden Beispiele, bei der das Spannelement (7) eine Dicke (D) von 2 mm bis 8 mm aufweist, bevorzugt eine Dicke (D) von 4 mm aufweist.
9. Walze (100), die einen Walzenkörper (3) mit einer oder mehreren Bohrungen (4) hat, wobei die Walze (100) eine Heizvorrichtung (1) nach einem der vorangegangenen Beispiele aufweist, die in die Bohrung (4) eingesetzt ist, wobei das Spannelement (7) eine Innenfläche (5) der Bohrung (4) kontaktiert, so dass von dem Heizelement (2) bereitgestellte Wärme durch das Spannelement (7) leitend an die Walze (100) und/oder den Walzenkörper (3) übertragbar ist.
10. Walze (100) nach Beispiel 9, bei der die Bohrung an oder in einer Symmetrieachse der Walze (100) angeordnet ist, wobei bevorzugt sich die Bohrung in eine Längsrichtung der Walze (100) erstreckt.
11. Walze (100) nach Beispiel 9 oder 10, bei der die Heizvorrichtung in der Bohrung (4) zwischen einem Adapter (101) und einer Feder (102) axial gelagert ist.
12. Walze (100) nach Beispiel 11, bei der ein Vorspannweg der Feder (102) verstellbar ist, bevorzugt über eine Schraubverbindung (104) verstellbar ist, so dass bevorzugt eine axiale Vorspannung auf die Heizvorrichtung (1) einstellbar ist.
13. Walze (100) nach einem der vorangegangenen Beispiele 9 bis 12, bei der die Bohrung einen Durchmesser zwischen 5 mm und 40 mm aufweist, bevorzugt einen Durchmesser von 32 mm aufweist.
14. Walze (100) nach einem der einem der vorangegangenen Beispiele 9 bis 13, bei der die Heizvorrichtung (1), oder zumindest das Heizelement (2), lösbar mit der Walze (100) und/oder in der Bohrung (4) befestigt ist, bevorzugt über eine Schraubverbindung.
15. Kalander oder Prägekassette, der oder die mindestens eine Walze (100) nach einem der vorangegangenen Beispiele 9 bis 14 aufweist, wobei bevorzugt der Kalander oder die Prägekassette ein Walzenpaar aufweist, das zwei Walzen (100) nach einem der vorangegangenen Beispiele 9 bis 14 umfasst, die mit entsprechenden Heizvorrichtungen beheizt sind.

### Bezugszeichenliste:

- 1: Heizvorrichtung
- 2: Heizelement
- 3: Walzenkörper
- 4: Bohrung
- 5: Innenfläche
- 6: Luftspalt
- 7: Spannelement
- 8: erster Spannring
- 9: zweiter Spannring
- 10: erste Fläche
- 11: zweite Fläche
- 12: Mantelfläche
- 13: Leitung/Kabel/Kabeldurchführung/Schlauch

- 100: Walze
- 101: Adapter
- 102: Feder
- 103: zweiter Adapter
- 104: Schraubverbindung
- 105: Hülse
- 106: Schraube
- 107: Zapfen
- 108: Druckstück

- X: Drehachse
- L: Längsrichtung
- H: Durchmesser
- D: Dicke
- B: Durchmesser
- S: Dicke
- Δt: Zeitdifferenz

## Patentansprüche

1. Heizvorrichtung (1) zum Beheizen einer Walze (100), wobei die Heizvorrichtung (1) ein Heizelement (2) aufweist, das dazu eingerichtet ist, in eine Bohrung(4) der Walze (100) eingesetzt zu sein und eine Heizleistung und/oder Wärme zum Beheizen der Walze (100) und/oder eines Walzenkörpers (3) der Walze (100) bereitzustellen, bevorzugt elektrisch bereitzustellen, und wobei die Heizvorrichtung (1) ein Spannelement (7) aufweist, das an einer Oberfläche (12) des Heizelements (2) angeordnet ist und das dazu eingerichtet ist, dass wenn die Heizvorrichtung (1) in die Bohrung (4) der Walze (100) eingesetzt ist, eine Innenfläche der Bohrung (4) zu kontaktieren und Wärme von dem Heizelement (2) leitend an die Walze (100) und/oder den Walzenkörper (3) zu übertragen.

2. Heizvorrichtung (1) nach Anspruch 1, bei der das Spannelement (7) ringförmig ist und/oder ein Konus-Spannelement ist oder aufweist.

3. Heizvorrichtung (1) nach einem der vorangegangenen Ansprüche, bei der das Spannelement (7) einen ersten Spannring (8) mit einer ersten schrägverlaufenden Fläche (10) und einen zweiten Spannring (9) mit einer zweiten schrägverlaufenden Fläche (11) aufweist, wobei die erste Fläche (8) und die zweite Fläche (9) einander kontaktieren und/oder abstützen.

4. Heizvorrichtung (1) nach einem der vorangehenden Ansprüche, bei der das Spannelement (7) eine variable und/oder verstellbare Dicke (D) aufweist.

5. Heizvorrichtung (1) nach einem der vorangehenden Ansprüche, bei der das Spannelement (7) eines, mehrere oder alle aus Messing, Bronze, Aluminium, Kupfer und/oder Stahl aufweist, oder aus einem, mehreren oder allen aus Messing, Bronze, Aluminium, Kupfer und/oder Stahl besteht.

6. Heizvorrichtung (1) nach einem der vorangehenden Ansprüche, bei der das Heizelement (2) zylinderförmig und/oder stabförmig ist, wobei das Spannelement (7) auf einer Mantelfläche (12) des Heizelements (2) angeordnet ist.

7. Heizvorrichtung (1) nach einem der vorangehenden Ansprüche, bei der das Heizelement (2) einen Durchmesser (H) zwischen 5 mm und 40 mm hat, bevorzugt einen Durchmesser (H) von 28 mm hat.

8. Heizvorrichtung (1) nach einem der vorangehenden Ansprüche, bei der das Spannelement (7) eine Dicke (D) von 2 mm bis 8 mm aufweist, bevorzugt eine Dicke (D) von 4 mm aufweist.

9. Walze (100), die einen Walzenkörper (3) mit einer oder mehreren Bohrungen (4) hat, wobei die Walze (100) eine Heizvorrichtung (1) nach einem der vorangegangenen Ansprüche aufweist, die in die Bohrung (4) eingesetzt ist, wobei das Spannelement (7) eine Innenfläche (5) der Bohrung (4) kontaktiert, so dass von dem Heizelement (2) bereitgestellte Wärme durch das Spannelement (7) leitend an die Walze (100) und/oder den Walzenkörper (3) übertragbar ist.

10. Walze (100) nach Anspruch 9, bei der die Bohrung an oder in einer Symmetrieachse der Walze (100) angeordnet ist, wobei bevorzugt sich die Bohrung in eine Längsrichtung der Walze (100) erstreckt.

11. Walze (100) nach Anspruch 9 oder 10, bei der die Heizvorrichtung in der Bohrung (4) zwischen einem Adapter (101) und einer Feder (102) axial gelagert ist.

12. Walze (100) nach Anspruch 11, bei der ein Vorspannweg der Feder (102) verstellbar ist, bevorzugt über eine Schraubverbindung (104) verstellbar ist, so dass bevorzugt eine axiale Vorspannung auf die Heizvorrichtung (1) einstellbar ist.

13. Walze (100) nach einem der vorangegangenen Ansprüche 9 bis 12, bei der die Bohrung einen Durchmesser zwischen 5 mm und 40 mm aufweist, bevorzugt einen Durchmesser von 32 mm aufweist.

14. Walze (100) nach einem der einem der vorangegangenen Ansprüche 9 bis 13, bei der die Heizvorrichtung (1), oder zumindest das Heizelement (2), lösbar mit der Walze (100) und/oder in der Bohrung (4) befestigt ist, bevorzugt über eine Schraubverbindung.

15. Kalander oder Prägekassette, der oder die mindestens eine Walze (100) nach einem der vorangegangenen Ansprüche 9 bis 14 aufweist, wobei bevorzugt der Kalander oder die Prägekassette ein Walzenpaar aufweist, das zwei Walzen (100) nach einem der vorangegangenen Ansprüche 9 bis 14 umfasst, die mit entsprechenden Heizvorrichtungen beheizt sind.
